# EUROPEAN PATENT SPECIFICATION

(11) **EP 4 683 549 B1**
(45) Date of publication and mention of the grant of the patent: **15.07.2026**
(21) Application number: 24718329.6
(22) Date of filing: 21.03.2024
(51) Int. Cl.: A47J 37/06, A47J 37/07

(54) **GRILLING APPARATUS**
GRILLGERÄT
APPAREIL DE CUISSON AU GRIL

(30) Priority: 21.03.2023 GB 202304135
(43) Date of publication of application: 28.01.2026
(73) Proprietor: Seergrills Ltd, Birmingham B3 1TX (GB)
(72) Inventor: SUDERA, Suraj, Birmingham B21 0AL (GB); THORNTON, Jamie, Birmingham B21 OAL (GB); MOGHIMI, Mohammadhossein, Birmingham B21 OAL (GB); SUDERA, Pawan, Birmingham B21 OAL (GB); KASHI, Navid, Birmingham B21 OAL (GB); GUNDU, Tonderai, Birmingham B21 OAL (GB); DREW, Thomas, Birmingham B21 OAL (GB); PHIPPS, Robert, Birmingham B21 OAL (GB); ASPLEY, Jordan, Birmingham B21 OAL (GB); PROCTER, Michael, Birmingham B21 OAL (GB)
(74) Representative: Blower, Timothy John
(86) International application number: PCT/EP2024/057695
(87) International publication number: WO 2024/194448

(56) References cited:
- US-A- 2 851 575
- US-A1- 2011 305 810

## Description

### Technical Field

The present invention relates to grilling apparatus.

### Background

Conventionally, grilling apparatus comprises a fixed heat source which primarily cooks food by radiant heat. In one example, the grilling apparatus comprises a heat source which is substantially planar and horizonal, and a plurality of support mountings, each of which is a different distance below the heat source. Items of food are presented to the heat source, for example, in a grill pan which is located into one of the support mountings. The distance between the heat source and the food item can be varied by re-locating the grill pan into a different one of the support mountings. In another example, the gilling apparatus comprises a barbecue grill, in which the food is cooked on a grille above the heat source by radiant heat, conduction (via the grille) and convection.

Grilling apparatus is used for relatively short periods of intense cooking at high temperature eg searing of steaks and thus such apparatus requires constant attention from a user while cooking. It can be difficult for a inexperienced user to achieve good results with such apparatus the speed of cooking is relatively quick and can vary depending on the type of food, the condition of the food and the degree of cooking required. Often, grilling results in overcooking and burning, or alternatively undercooking, with the risk of serving potentially dangerous food. For example, it is known that barbecues are a common source of food poisoning. The "hit and miss" nature of grilling is off-putting to many users since food for grilling is relatively expensive and is often used in entertainment or hospitality situations such as parties or barbecues.

US 2851575 A discloses a vertical broiler for operation in oven compartments of electric ovens in which a food item is cooked between two vertical heat sources. The food item is held vertically between the heat sources by a pair of holder members which are pivotally mounted to a holder member support. The holder members can be located in a plurality of different positions on the holder member support to cater for food items of different thickness. This arrangement does not account for changes in the thickness during cooking.

US 2011/305810 A1 discloses a cooking apparatus in which a food item is cooked between two vertical heat sources. The food item is located in a package which is held between the vertical heat sources, with the heat sources in contact with the package. However, cooking in a package is not always desirable.

In this specification, the terms "front" and "forward" etc refer to the side of the apparatus towards a user in normal operational use, and likewise "rear", "rearward", "back" and "backward" etc refer to the opposite side away from the user in normal operational use; upwards and downwards etc refer generally to the apparatus in normal operational use, in which "down" is down into the ground or floor and "up" is away from the ground or floor.

In this specification, the word "substantially" is used to mean "exactly or for practical purposes, as will be understood by a skilled person in the technical field". This includes some variation from "exactly" because of practical considerations. For example, in the technical field of this invention, "substantially horizontal" might include ±10° from the horizontal.

### Statements of Invention

According to a first aspect of the present invention, there is provided a grilling apparatus as defined in claim 1.

Other possible features of the invention are defined in the dependent claims.

### Figures

Embodiments of the present invention will now be described, by way of example only, and with reference to the accompanying drawings, in which:-
Fig. 1 is a view from the front of a grilling apparatus in a grilling configuration;
Fig. 2 is a perspective view from the front, above and one side showing some internal components of the grilling apparatus of Fig. 1;
Fig. 3 is a perspective view of a food item holder of the grilling apparatus in an open condition;
Fig. 4 is a perspective view of the food item holder of Fig. 3 in a closed and loaded condition, with a position measuring device;
Fig. 5 is a perspective view similar to Fig. 4, with a cross-sectional view at one end as indicated by section line V-V in Fig. 4;
Fig. 6 is a perspective view similar to Fig. 5, with the holder in the unloaded condition, but with the holder members positioned at a maximum outward extent;
Fig. 7 and 8 are respectively a plan view and a perspective view of part of the grilling apparatus, showing the holder in closed, loaded, and inserted conditions and showing heat sources and heat source mountings with the heat sources in outward positions;
Fig. 9 and 10 are respectively a plan view and a perspective view of part of the grilling apparatus, showing the holder in closed, loaded, and inserted conditions and showing heat sources and heat source mountings with the heat sources in inward positions;
Fig. 11 is a perspective view from the rear, above and one side showing some internal components of the grilling apparatus of Fig. 1, with the holder not present;
Fig. 12 is a view of the apparatus from the front, with the holder not present;
Figs. 13A and 13B are respectively exploded and section views of a suspension arrangement of the holder;
Fig. 14 is a perspective view of the grilling apparatus in a pizza/baking configuration;
Figs. 15 and 16 are respectively perspective and front views of the grilling apparatus in a rotisserie configuration;

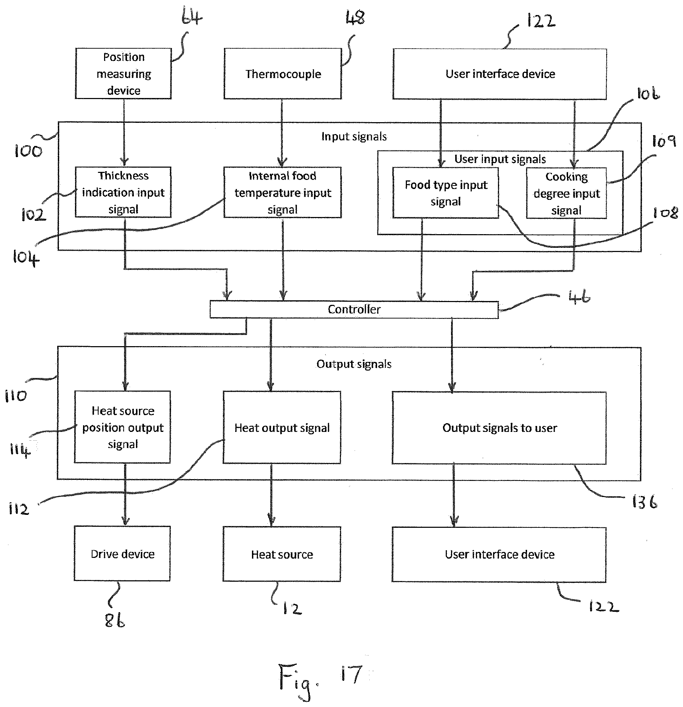

Fig. 17 is a schematic block diagram showing a method of operation of the grilling apparatus;
Fig. 18 is a perspective view from the front, above and one side showing some internal components of another grilling apparatus with a drip tray in partially removed condition;
Fig. 19 is a perspective view from front, below and one side showing the grilling apparatus of Fig. 18;
Fig. 20 is a perspective view from front, one side and below showing the grilling apparatus of Figs. 18 and 19, with the drip tray in a fully inserted condition and with an underside cover removed to show a drive device; and
Fig. 21 is a view from below of the apparatus of Figs. 18 to 20 with the drip tray in a fully inserted condition and with both of the underside covers removed.

In the drawings, where multiple instances of the same or similar features exist, only a representative one or some of the instances of the features have been provided with numeric references for clarity.

### Description

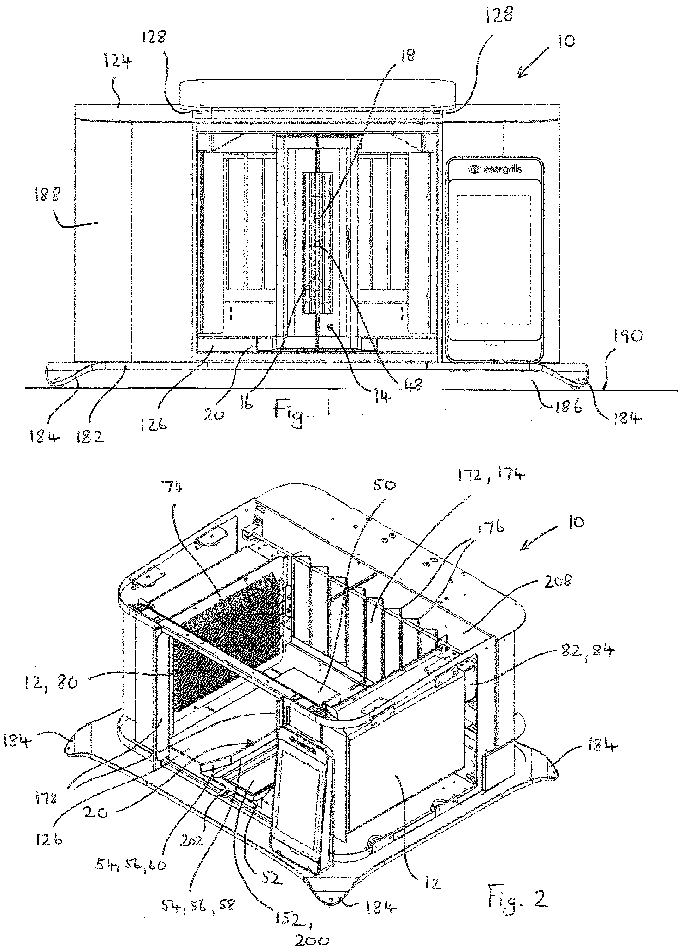

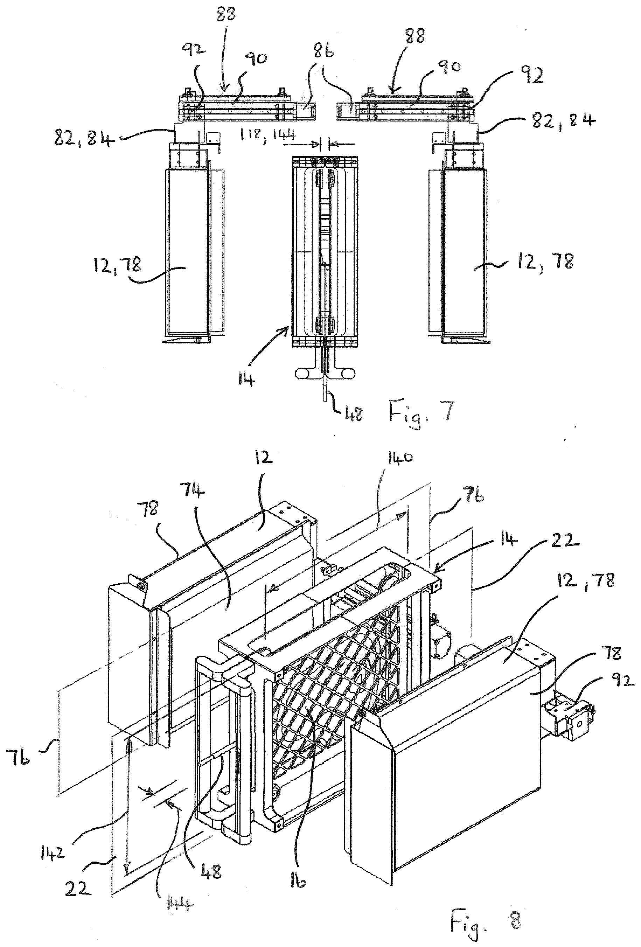

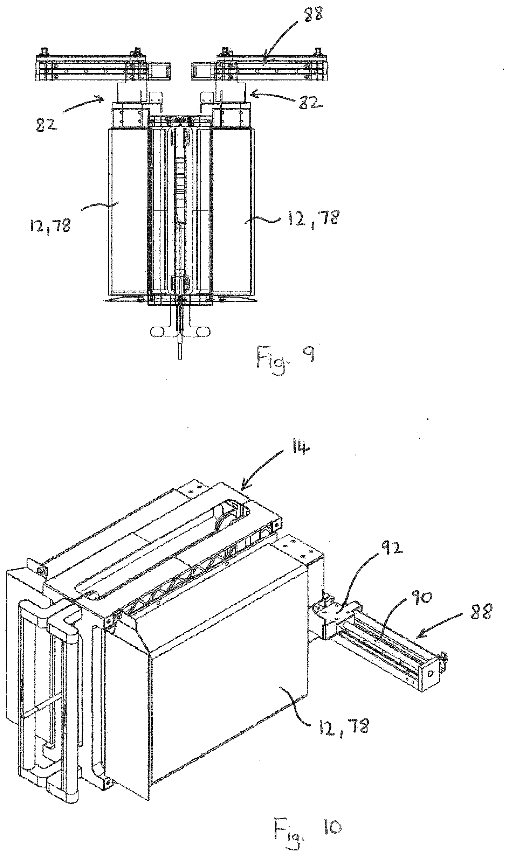

Figs. 1 to 16 show grilling apparatus 10, which includes:
- a heat source 12 which, in use, produces radiant heat energy which travels along a heat path,
- a holder 14, which, in a loaded condition, holds a food item 16,
- and a holder mounting 20 which, when the apparatus 10 is in a cooking condition, mounts the holder 14 in the heat path.

Figs 1 to 13B show the grilling apparatus 10 in a grilling configuration.

In the examples shown, the apparatus 10 includes a pair of the heat sources 12 and the holder mounting 20 locates the holder 14 between the heat sources 12 in a predetermined location in the heat path.

The holder 14 defines a holding space 18. In the loaded condition, the food item 16 is located in the holding space 18. In an unloaded condition, the holding space 18 is empty.

The holder 14 is movable between an open condition, in which the food item 16 is locatable into and removable out of the holding space 18, and a closed condition, in which the food item 16 is not locatable into and removable out of the holding space 18.

The holding space 18 has a length 140, a width 142, and a thickness 144. The length 140 and the width 142 are greater than the thickness 144. The length 140 and the width 142 extend in a holding space plane 22. The thickness 144 extends normally to the holding space plane 22. In the example shown, in the cooking condition, the holding space plane 22 is in a substantially vertical orientation.

The holder 14 comprises a pair of holder members 24. The holding space 18 is defined between the holder members 24. In the loaded condition, both holder members 24 locate against and in contact with the food item 16.

The holder 14 includes a holder member support 26. Both holder members 24 are slidingly mounted to the holder member support 26. The holder member support 26 includes support rods 28 and both holder members 24 slide along the support rods 28.

The holder member support 26 includes resilient members 30 to bias the holder members 24 towards each other, and in one example could apply a holding pressure to the food item 16. One resilient member 30 is mounted to each support rod 28. Each resilient member 30 could comprise a spring.

The holder member support 26 includes a centring mechanism 32, which automatically centres the holder members 24 (and thus the holding space 18) in the holder member support 26. The centring mechanism 32 comprises the support rods 28 and the resilient members 30.

The holder member support 26 includes a pair of support frames 34. Each support frame 34 supports one of the holder members 24 and each support frame 34 includes the support rods 28.

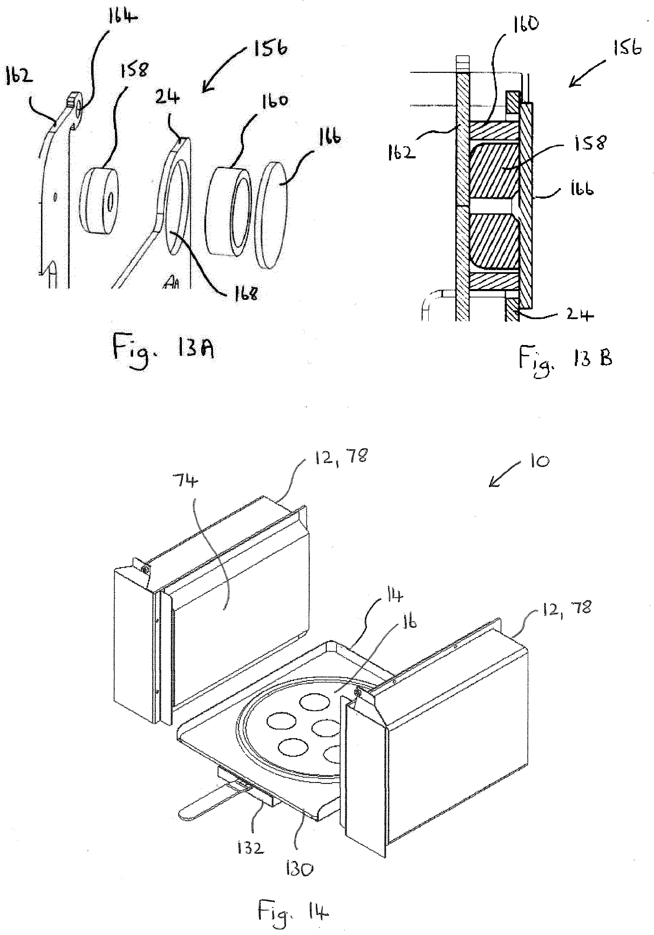

Referring to Figs. 13A and 13B, each holder member 24 is removably mounted to its respective support frame 34 at each upper corner by a suspension arrangement 156, each of which could include a suspension magnet 158.

Each suspension arrangement 156 includes a suspension member 162 which defines a suspension hole 164 which receives one of the support rods 28; a suspension magnet 158 which is attached to the suspension member 162 by a screw (not shown); a heat shield washer 160 and a securing member 166, which is arranged to be attracted to the suspension magnet 158.

Each holder member 24 defines a washer receiving hole 168 in which the heat shield washer 160 is receivable.

The securing member 166 has a larger dimension (eg diameter) than the washer receiving hole 168 to hold the holder member 24 in position, but allow easy removal for cleaning.

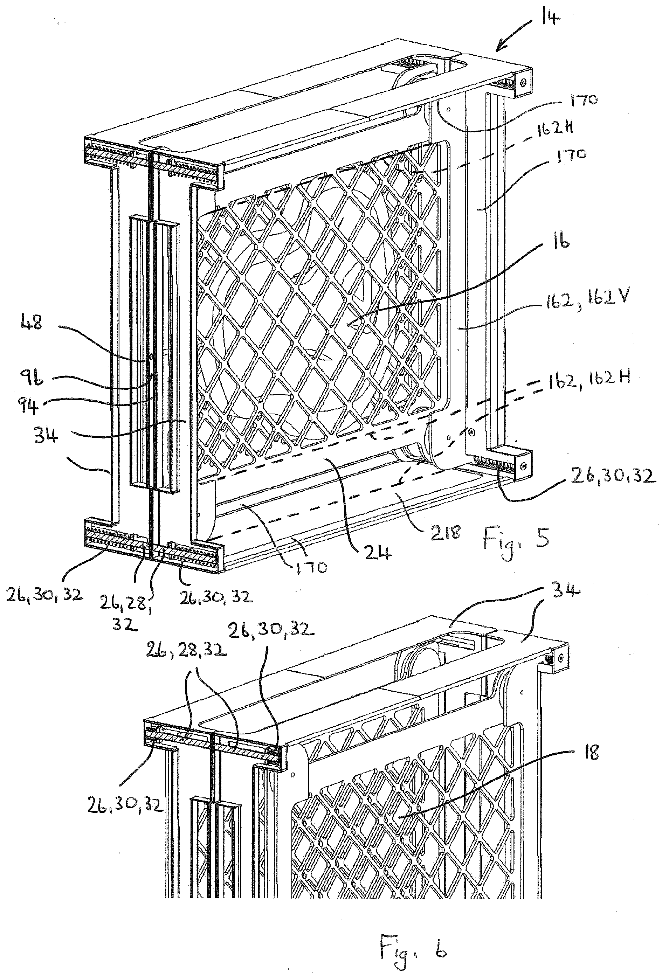

In the example shown, each suspension member 162 comprises a vertically extending suspension member 162V which extends along one side of the support frame 34 between an upper corner and a lower corner. In another embodiment, each suspension member 162 includes two vertically extending suspension members 162V and two horizontally extending suspension members 162H (indicated by dashed lines in Fig. 5) which extend along upper and lower sides of the support frame 34, so that each suspension member 162 extends along four sides of the support frame 34.

The holder 14 includes holder surfaces 170 which direct heat towards the food item 16 in the holding space 18. In the example shown, the holder surfaces 170 are surfaces of the support frames 34.

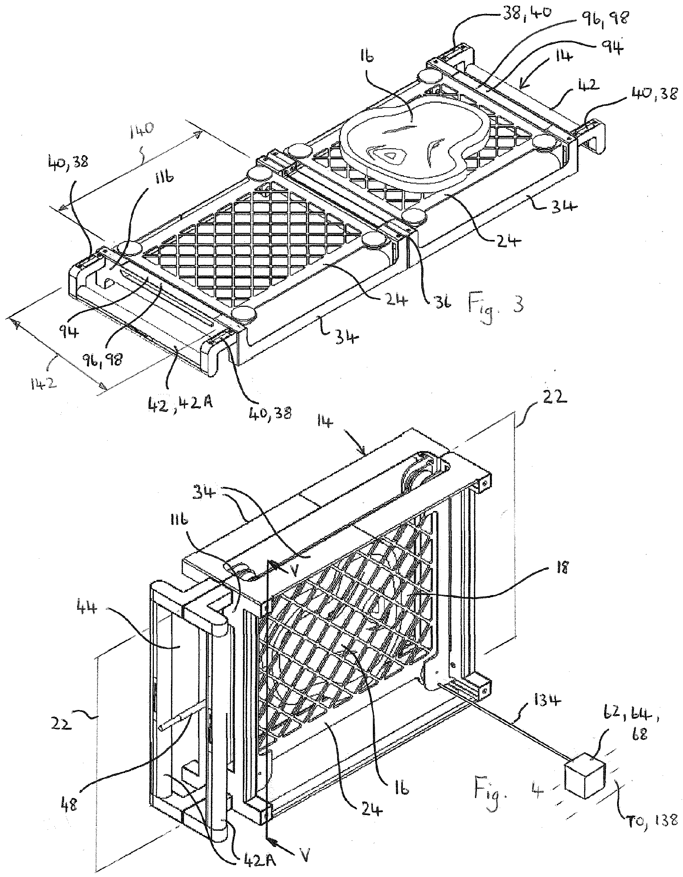

The holder member support 26 includes a hinge 36 which connects the two support frames 34 so that they are hingedly connected. In the open condition as shown in Fig. 3, the support frames 34 extend away from each other so that the food item 16 is locatable into and removable out of the holding space 18. In the closed condition, the support frames 34 extend alongside each other substantially in parallel and the food item 16 is not locatable into and removable out of the holding space 18.

The holder member support 26 includes a retention arrangement 38 to retain the frames 34 in the closed condition. The retention arrangement 38 includes one or more catches 40, which could be magnetic. In the example shown, the retention arrangement 38 includes two pairs of magnetic catches 40, with one pair located on each frame 34.

The holder member support 26 includes a handle 42 which in the inserted condition, extends forwardly for gripping by a user. In the example shown the handle 42 comprises two handle parts 42A each of which comprises part of the one of the frames 34. In the closed condition, the handle parts 42A define a handle aperture 44 therebetween.

The holder member support 26 includes a thermocouple mounting formation 94 for mounting a thermocouple 48. The thermocouple mounting formation 94 defines a passage 96 in which the thermocouple 48 is locatable. The passage 96 extends rearwardly from a front face 116 of the holder member support 26 towards the holding space 18. Each frame 34 defines a part 98 of the passage 96.

The holder mounting 20 defines a holder receiving space 50, which locates the holder in the predetermined location relative to the heat source(s). The holder 14 is movable between an inserted condition in which the holder 14 is located in the holder receiving space 50 and a removed condition in which the holder 14 has been removed from the holder receiving space 50.

The holder mounting 20 comprises a base 52, on which the holder 14 locates in the inserted condition. The base 52 is located below the heat source 12.

The holder mounting 20 includes guide formations 54 which guide the holder 14 as it is moved between the inserted and removed conditions. The guide formations 54 comprise a pair of spaced apart upstanding guide walls 56 which extend upwardly from the base 52. In the inserted condition, the holder 14 locates between the guide walls 56. Each of the guide walls 56 includes a locating portion 58. The locating portions 58 are a relatively close fit to the holder 14 in the inserted condition, and ideally are a sliding fit, so that the holder 14 is located in a consistent and repeatable position relative to the heat sources 12. In the example shown, each guide wall 56 includes an angled entrance portion 60. The angled entrance portions 60 diverge away from each other.

The apparatus 10 (desirably, the holder mounting 20) could include a drip tray arrangement 200 which includes a removable drip tray 152 for catching material released from the food item during cooking, such as fat, grease, food particles etc. The drip tray 152 is located beneath the holder receiving space 50.

The support frames 34 together define a drip aperture 218 (see Fig. 5) to permit draining of the material released from the food item during cooking to the drip tray 152.

The apparatus 10 includes a thickness sensor 62, for providing an indication of the thickness of the food item 16.

The apparatus 10 includes a position measuring device 64, for measuring the position of one or both of the holder members 24. In the example shown, the position measuring device 64 measures the position of one of the holder members 24. The position measuring device 64 could comprise an optical sensing means 66, such as a laser, which in use produces a measuring beam 134.

The thickness sensor 62 comprises the position measuring device 64.

The apparatus 10 includes a position measuring device mounting 70 for mounting the position measuring device 64 in a fixed relationship to the holder mounting 20. In the example shown, the position measuring device mounting 70 could comprise the housing frame 138. The position measuring device 64 measures the distance between one of the holder members 24 and the position measuring device 64 in the inserted and loaded conditions.

Each heat source 12 comprises a heat production area 74, over which area the radiant heat energy is produced in the cooking condition. The heat production area 74 could be substantially flat and substantially extends in a heat source plane 76. The heat source plane 76 extends substantially parallel to the holding space plane 22 and is spaced away from the holding space plane 22.

The heat production area 74 corresponds in shape to the holding space 18 and is of similar size to the holding space 18 and in one example, could be of similar size within ± 10%.

The heat source plane 76 is in a substantially vertical orientation.

Each heat source 12 comprises one heat production device 78, which could comprise a burner or element 80 and comprises the heat production area 74.

Each heat source 12 is movable towards and away from the holder mounting 20 between an outward position and an inward position. In one the example shown, the apparatus 10 is arranged so the movement of each heat source 12 is independent of the other.

In another example, the apparatus 10 could be arranged so that the heat sources 12 move together at the same time. The movements could be substantially identical in amount and opposite in direction.

The apparatus 10 includes one or more heat source mountings 82. In the example shown, the apparatus 10 includes two heat source mountings 82, and each heat source mounting 82 mounts a respective one of the heat production devices 78.

In the example shown, each heat source mounting 82 is arranged to permit linear movement of the respective one of the heat sources 12 towards and away from the holder mounting 20.

The apparatus 10 includes a housing frame 138. Each heat source mounting includes a track 146 which is supported by the housing frame 138 and a roller 148, which moves along the track 146 and which support the respective heat source 12.

Each heat source mounting 82 includes a mounting arm 84 which extends rearwardly and (in the example shown) substantially horizontally from the respective heat source 12.

The apparatus 10 includes a drive device 86 (eg a motor) for moving the heat sources 12 towards and away from the holder mounting 20. The movement of the heat sources 12 is lateral, linear, substantially horizontal, and in a direction which is substantially normal to the holding space plane 22. The drive device 86 is connected to each heat source mounting 82.

The drive device could comprise a stepper motor. Alternatively the drive device could comprise a servo motor.

In another example (not shown), the drive device could comprise a linear drive device, which could comprise a linear actuator.

In the example shown, each heat source mounting 82 includes a linear drive converter 88, which converts rotary movement (eg from a motor) to linear movement. The mounting arm 84 is connected to and supported by the linear drive converter 88.

The linear drive converter 88 could comprise a threaded shaft 90 and a threaded drive connector 92 which is mounted on to the threaded shaft 90 and which supports the mounting arm 84.

In the example shown, each mounting arm 84 is connected to and driven by a separate drive device 86 via separate linear drive converters 88. Advantageously, this permits the heat sources 12 to be moved independently of each other, which widens the range of possible cooking options.

In another example, the mounting arms 84 could be driven by a common drive device 86, which could drive a common threaded shaft 90 which has two parts, one part having a screw thread running in one direction and the other having a screw thread running in the opposite direction, with each part driving one of the mounting arms 84, so that the mounting arms 84 move together but in opposite directions.

The linear drive converter could comprise a lead screw, a ball screw, a threaded nut and/or a nut block, a belt drive or a rack and pinion.

In one example, the linear drive converter comprises a lead screw which may have a screw pitch of no more than 6mm, possibly no less than 2mm and desirably may have a screw pitch of 4mm.

In one example, the drive device and the heat source mounting are arranged to provide a positioning accuracy of the heat source of ±2.0mm, more preferably ±0.5mm and optimally ±0.2mm.

The apparatus 10 includes a controller 46, which controls the operation of the apparatus 10. The controller 46 receives input signals 100 and provides one or more output signals 110 which are dependent on the input signals 100 received.

The input signals 100 could include a thickness indication input signal 102 provided by the thickness sensor 62. In the example shown, the thickness indication input signal 102 is not derived from a true measure of the thickness of the food item, but has been derived from the measured location of one of the holder members 24 by the position measuring device 64. In the example shown, this derivation takes into account that the holder members 24 are self-centring in the holder member support 26 and the holder member support 26 is located relatively precisely and repeatedly in the holder mounting 20. Thus, in the loaded condition, this arrangement will centre the food item 16 in the holder member support 26 and the holder mounting 20.

The input signals 100 include an internal food temperature input signal 104 provided by the thermocouple 48.

The input signals 100 include one or more user input signals 106 which could include a food type input signal 108 (eg indicating beef, pork chicken etc) and an input signal 109 relating to the degree of cooking required by the user (eg well, medium, rare etc).

The input signals 100 could also include weight of food item, colour, texture, water content, fat content.

The output signals 110 include a heat output signal 112 which controls the heat output of the respective heat source 12. In one example, the heat outputs of the heat sources 12 are controlled together by one signal. In another example, the controller 46 provides a separate heat output signal 112 for each heat source 12. In the latter case, the heat outputs of the different heat sources could be controlled independently of each other, allowing a wider range of cooking options.

The output signals 110 include a heat source position output signal 114 to control the position of the heat source(s) 12. In one example, the positions of the heat sources 12 are controlled together by one signal 114. In another example, the controller 46 provides a separate position output signal 114 for each heat source 12. In the latter case, the positions of the different heat sources 12 could be controlled independently of each other, allowing a wider range of cooking options.

The apparatus 10 could include a user interface device 122 which could include a touch screen to permit input of the user input signals 106 and display user output signals 136. The user output signals 136 could include cooking parameters such as the internal temperature of the food item 16, expected cooking finish time, cooking time remaining etc, and could in information messages, warning messages and alarm signals.

The apparatus 10 could include a housing 124, which houses the components of the apparatus 10 described above. The housing 124 defines an access aperture 126 through which the holder 14 can be inserted into and removed from the holder receiving space 50 and vents 128 for releasing heat in use.

The housing 124 could include a housing base 182 which could be in the form of a plate. The housing 124 could include side walls 188 which extend upwardly from the housing base 182 and could include legs 184 which extend downwardly from the housing base 182 to space the housing base 182 from a support surface 190, so that an air gap 186 is defined between the support surface 190 (Fig. 1) and the housing base 182.

The apparatus 10 could include heat barriers 172 for blocking heat flow away from the food item 16 in use. The heat barriers 172 could include curtains 174. In the example shown, the apparatus 10 could include one curtain 174, which could be extendible and could be attached at each end to a different one of the mounting arms 84. The curtain 174 could comprise concertina folds 176.

The heat barriers 172 could include a partition wall 208 which extends between the heat sources 12 and a cooler zone 212, which is rearwards of the heat sources 12. The drive devices 86 and the linear drive converters 88 could be located in the cooler zone 212. The apparatus 10 includes gas supply components 214 (such as pipework, connectors, valves etc) which is located in the cooler zone 212.

In the cooking condition, the drip tray 152 is located between the guide wall locating portions 58 and can be removed therefrom for emptying/cleaning by simply lifting upwardly and then forwardly through the housing access aperture 126. The drip tray 152 could include a forwardly projecting handle 202 to aid gripping by a user, which in the example shown is in the form of a tab.

### In Use

In use, the holder 14 is initially in the removed, unloaded and open conditions as shown in Fig. 3, with the support frames 34 extending away from each other. The holder 14 could, for convenience, be lying flat on a surface such as a table or worktop.

In the unloaded condition, the holder members 24 are biased inwardly by the springs 30, which urge the holder members 24 inwardly along the rods 28.

In one method of use, the thermocouple 48 is inserted into the food item 16, the food item 16 is located in the holding space 18 against and on top of one of the holder members 24 to move the holder 14 to the loaded condition. The thermocouple 48 is located in one of the passage parts 98.

The holder 14 is then moved to the closed condition by rotating the support frames 34 about the hinge 36 to extend alongside each other in parallel, as shown in Fig. 4.

With the holder 14 in the closed and loaded condition, the holder members 24 have now been moved outwardly by the presence of the food item 16 in the holding space 18, compressing the springs 30, so that the holder members 24 apply a holding pressure to the food item 16. This holds the food item 16 securely when the holder 14 is located in the vertical orientation.

With the heat sources 12 both in the outward condition and the holder 14 in the closed and loaded condition, the holder 14 is moved to the inserted condition by locating the holder 14 on the base 52 between the guide wall entrance portions 60 and then sliding the holder 14 horizontally rearwards through the front side of the apparatus to locate in the holder receiving space 50 between the guide wall locating portions 58.

Advantageously, the holder mounting mounts the holder 14 in the predetermined location with a lateral accuracy (ie in a direction normal to the holding space plane) of ± 3mm, more preferably ± 2mm and optimally ±0.5mm. Thus the holder 14 is accurately and consistently located in the cooking condition.

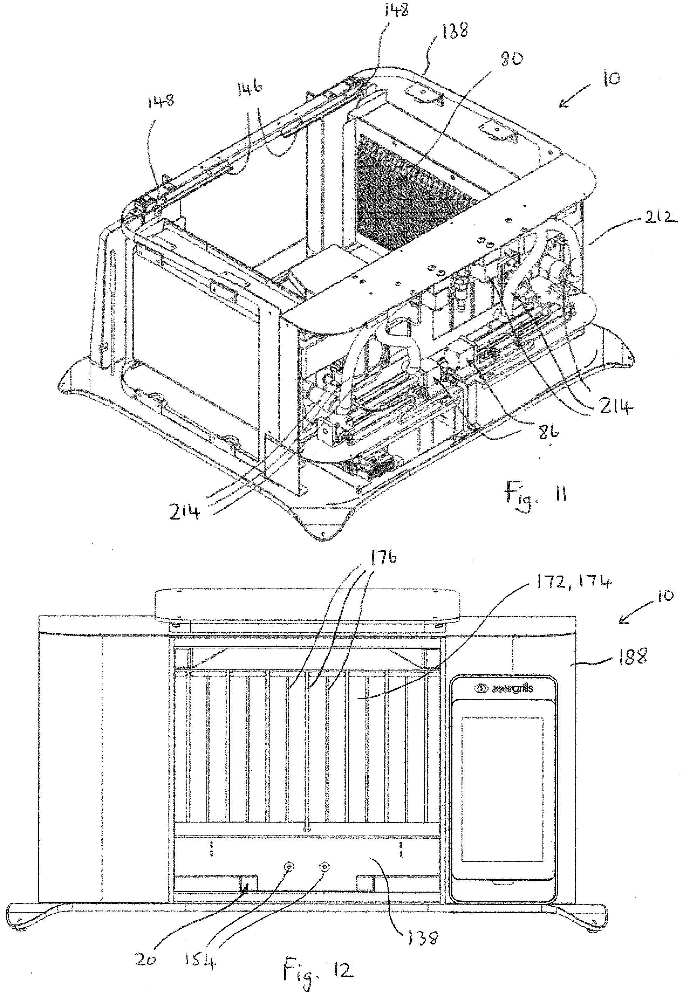

The apparatus 10 could include position magnets 154 (Fig. 12) which could be mounted to the housing frame 138 and could attract the holder 14 to draw the holder 14 into the correct location and provide tactile feedback and reassurance to the user that the holder 14 is fully inserted.

In the closed condition, the thermocouple 48 extends forwardly from the food item 16, and along the passage 96, and into and through the handle aperture 44.

The thermocouple 48 can then be connected to the controller 46 by a wire (not shown), or by a wireless connection (not shown) to provide the internal food temperature input signal 104.

With the holder 14 in the inserted condition, the controller 46 is programmed by the user with the food type input signal 108 and the required cooking degree input signal 109 via the user interface device 122.

With the holder 14 in the closed, loaded and inserted conditions, the position measuring device 64 measures the position of one of the holder members 24 to provide the thickness indication input signal 102, as described earlier.

The controller 46 provides the heat output signal 112 which controls the operation of the heat sources 12, and the heat source position output signal 114 which controls the location of the heat sources 12. To commence cooking the controller 46 moves the heat sources 12 from the outward position inwardly to a cooking position and the heat sources 12 are moved from an off condition to a heating condition.

The cooking position could be dependent on the thickness of the food item 16. In one example, the controller 46 has a library of stored offset values which could be predetermined values relating to an offset distance between the food item 16 and the heat source 12 for different food types.

For example, if the food item 16 is beef steak which is 12mm thick, the offset value on each side could be 50mm and the cooking positions of the heat sources could be (12/2 + 50 =) 56mm away from a centreline of the holder mounting 20 on each side.

In one example, each heat source 12 could comprise a gas burner 80, which could be lit by an igniter (not shown) and the controller 46 could control the volumetric gas supply to the burner 80.

The controller 46 monitors the internal food temperature input signal 104 provided by the thermocouple 48 until a limit temperature is reached, at which point the controller 46 could move the burners 80 to the off condition and the outward position. This ensures that cooking times are precise and prevents over-cooking.

In another example, the cooking time is calculated by the controller 46 without the internal food temperature being monitored.

The Applicant has realised that the accuracy of positioning of the holder (and the food item) and the burners is important when high heat outputs are used to obtain fast cooking times. Thus the apparatus permits both the holder and the heat sources to be located relative to each other with a high degree of accuracy, repeatability and consistency.

The Applicant has realised that the apparatus 10 provides a great deal of operating flexibility. In one operating mode, the heat output and the heat source positions could be operated manually by the user. In another operating mode, the controller 46 could be programmable to permit the use of cooking profiles which permit variation of the heat output and the heat source position during cooking. During cooking, the controller 46 could vary the heat output and the heat source position. For example, the heat source position output signal 114 could be varied to move the respective heat source 12 between a plurality of cooking positions in the cooking condition. The heat output could be "pulsed" or cyclically increased and decreased. The cooking could be ceased when a predetermined "carry over" internal temperature has been reached, which is the temperature at which the food will continue to cook when removed from the heat.

### Advantages

The Applicant has found that the apparatus permits even an unskilled user to cook food accurately, preventing/reducing overcooking, drying out, and undercooking, thus reducing waste and the risk of food poisoning and thus reducing the risk of embarassment/anxiety for the user at parties and barbecues.

Surprisingly, the Applicant has found that cooking times are dramatically reduced since both sides of the food item can subjected to intense heat at once, rather than requiring both sides to be cooked sequentially as in conventional arrangements. This helps retain juices and flavour and thus the quality of the cooked food is improved.

The Applicant has surprisingly found that with the food item and the heat sources in the vertical orientation, more juices are retained within the food item, again improving flavour. Additionally, in the vertical orientation, water vapour is released, rather than being trapped between a grill pan and the food item. This improves flavour and reduces the cooking time, since water vapour acts to reduce the temperature of the cooking oil in a grill pan.

The Applicant has found that the rapid, thorough cooking reduces the energy input required.

### Pizza/Baking Configuration

The apparatus 10 could be movable between a grilling configuration (as show in Figs. 1 to 13) and a pizza/baking configuration (as shown in Fig. 14). In the pizza/baking configuration, the holder 14 of the invention is not used, but an alternative holder not according to the invention is used in the form of a pizza/baking tray 130.

In the pizza/baking configuration, a food item 16 such as a pizza is located on the tray 130 and positioned between the heat sources 12. The heat sources 12 could be operated in the outward position to maximise the size of the tray 130, or the cooking position could be matched to the size of the tray 130. The tray 130 could include a locating formation 132 which corresponds in size and shape to the guide formations 54. A thermocouple 48 could be located in the food item 16.

The apparatus 10 includes one or more doors 178 (Fig. 2) for closing the housing access aperture 126.

Other aspects of this operating configuration could be similar to those described above.

### Rotisserie Configuration

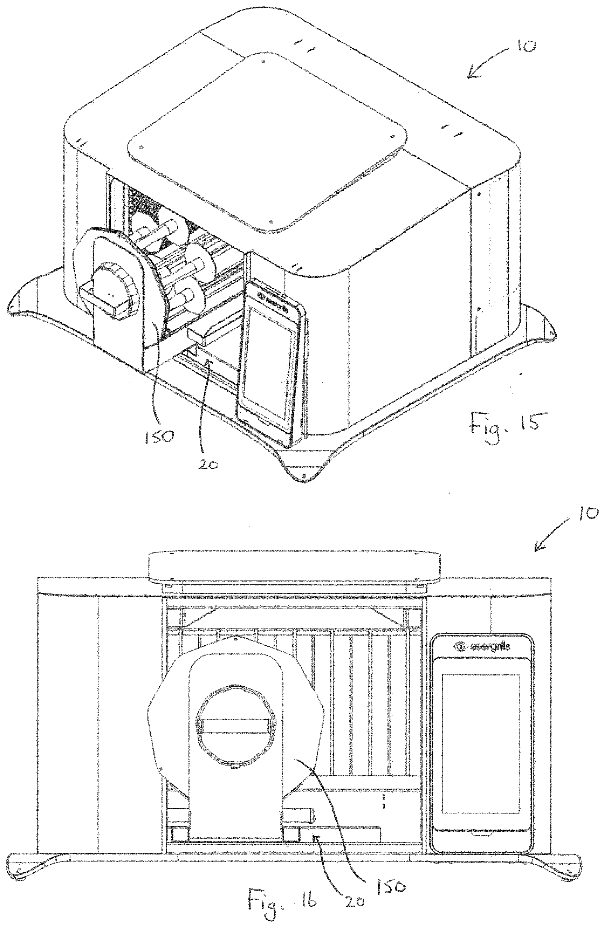

The apparatus 10 could be movable between the grilling configuration and a rotisserie configuration. In the rotisserie configuration as shown in Figs. 15 and 16, the holder 14 of the invention is not used, but an alternative holder not according to the invention is used in the form of a rotisserie 150.

In the rotisserie configuration, the holder mounting 20 could be moved sideways towards one of the heat sources 12 and away from the other, to accommodate the food item on the rotisserie 150 and, in the cooking condition, only the other heat source 12 is operated.

Other aspects of this operating configuration could be similar to those described previously.

### Second Embodiment, not covered by the claims

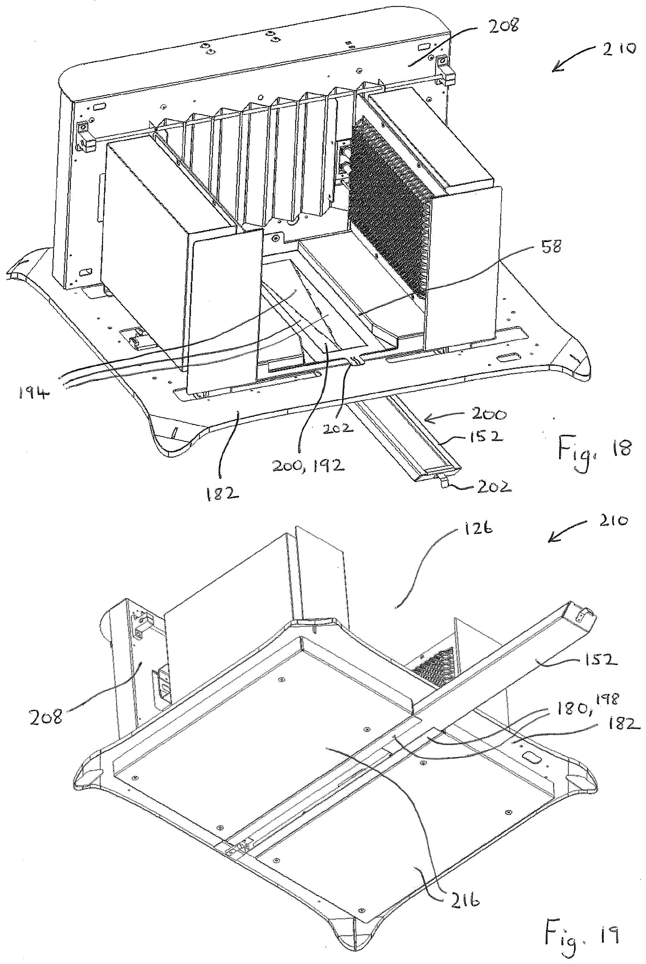

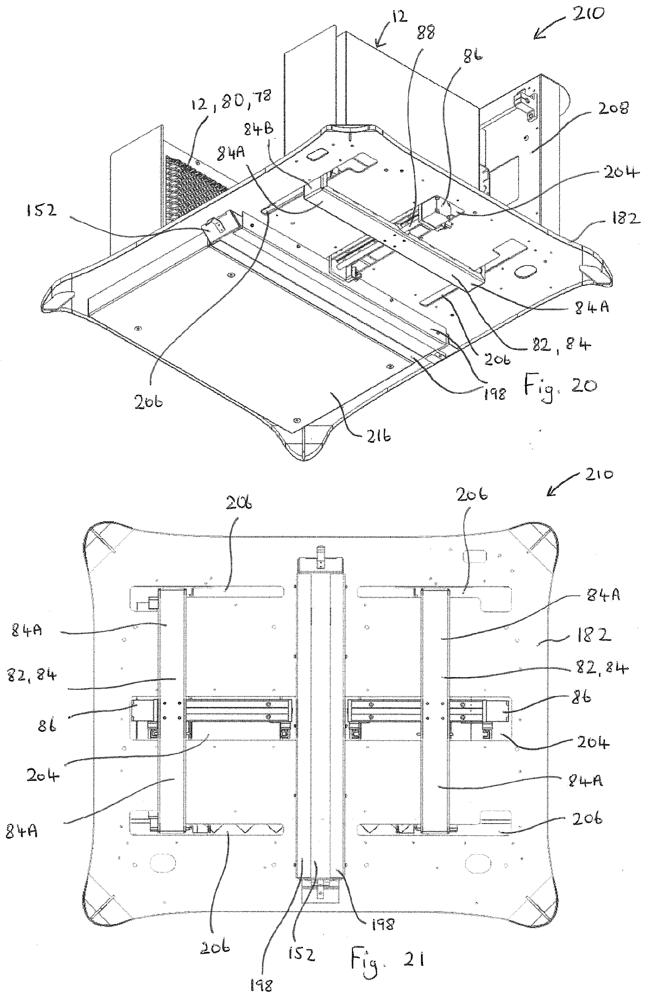

Figs. 18 to 21 show another embodiment of the invention, second grilling apparatus 210, many features of which are similar to those already described in relation to the embodiment of Figs. 1 to 16. Therefore, for the sake of brevity, the following embodiment will only be described in so far as it differs from the embodiment already described. Where features are the same or similar, the same reference numerals have been used and the features will not be described again.

The second grilling apparatus 210 includes a drip tray arrangement 200 which includes a removable drip tray 152 and a drip tray mounting 180. The drip tray mounting 180 slidably mounts the drip tray 152 to an underside of the housing base 182 so that the drip tray 152 is slidably movable between a fully inserted condition and a fully removed condition.

The drip tray arrangement 200 includes a removable funnel 192 which includes sloping side walls 194 which slope downwardly towards a funnel aperture (not shown) which is towards the front of the apparatus 210.

The drip tray mounting 180 includes a pair of support members 198 (which could be L-shaped in section) which support the drip tray 152 underneath the funnel 192.

In the cooking condition, the drip tray 152 is located on the support members 198 beneath the funnel aperture in the fully inserted condition. Material released from the food item during cooking is captured by the funnel 192 and liquid such as hot grease or fat can drip through the funnel aperture and into the drip tray 152. After cooking the drip tray 152 is slidingly moved along the support members 198 and lifted clear to the fully removed condition to permit emptying and cleaning.

The funnel 192 is removable from between the guide wall locating portions 58 for emptying/cleaning by simply lifting upwardly and then forwardly through the housing access aperture 126.

The drip tray 152 and/or the funnel 192 could include a forwardly projecting handle 202 to aid gripping by a user, which in the example shown is in the form of a tab.

Advantageously, the drip tray arrangement 200 of this embodiment has been found by the Applicant to ease the collection of material released during cooking, in particular by separating liquid from solid particles.

In the second grilling apparatus 210, the drive devices 86 are located beneath the heat sources 12 rather than to one side.

In this embodiment, each of the drive devices 86 and the respective linear drive converters 88 are located in a drive slot 204 defined by the housing base 182. The mounting arm 84 includes a pair of lateral parts 84A, which extend laterally in opposite directions and are each connected to a vertical part 84B which extends upwardly through a mounting arm slot 206 defined by the housing base 182 to support the respective heat source 12. Thus each of the heat production devices 78 is supported by one mounting arm 84 at two ends, improving stability.

The apparatus 210 includes a pair of covers 216, one cover 216 being affixed (eg by a suitable fastener such as a screw) to the underside of the housing base 182 to cover each drive device 86 and respective heat source mounting 82.

This arrangement of heat source mountings 82 and drive devices 86 provides a number of advantages. Each drive device 86 is closer to the respective heat source 12. Each drive device 86 is beneath the respective heat source 12. Each heat source 12 is supported at two ends. These features provide a more stable arrangement for supporting and moving the heat sources 12. It is also advantageous for the drive devices 86 to be located away from the gas supply components 214.

### Other Modifications

Various other modifications could be made.

The apparatus and various components thereof could be of any suitable size and shape, and could be formed of any suitable material (within the scope of the specific definitions herein).

In some examples, the drive device could comprise a linear drive arrangement such as a linear motor, or a cylinder/piston arrangement which could be pneumatic or hydraulic. The drive device could include actuators and any suitable transmission means, such as drive belts.

The linear drive converter could comprise a lead screw, a ball screw, a threaded nut and/or a nut block.

The or each heat source mounting could be arranged to permit user selection of different orientations of the heat source(s) relative to the holder mounting. **In** one example, the heat source mounting could permit the respective heat source to be moved between the vertical orientation described above, an angled (oblique) orientation and a substantially horizontal orientation.

The or each heat source mounting could be arranged to permit raising and lowering of the heat source relative to the holder mounting.

The apparatus could be portable, and could be battery powered.

### Final Remarks

There is thus provided grilling apparatus with a number of advantages over conventional arrangements. The apparatus provides improved control over the cooking of food items which permits relatively unskilled users to grill food items such as steak and chicken accurately and with confidence. Internal food item temperatures are monitored and the heat output and positions of the heat sources can be varied. The vertical orientation of the food item and the heat sources provides reduced cooking times and improved flavour.

## Claims

1. A grilling apparatus (10) , the apparatus including:
a heat source (12), which, in use, produces radiant heat energy which travels along a heat path,
a holder (14), which, in a loaded condition, holds a food item (16),
a holder mounting (20) which, when the apparatus is in a cooking condition, removably mounts the holder in the heat path in a predetermined location;
the heat source is movable towards and away from the holder mounting between an outward position and an inward position;
the holder defines a holding space (18);
the holding space has a length (140), a width (142), and a thickness (144); the length and the width are greater than the thickness; the length and the width extend in a holding space plane (22) and the thickness extends normally to the holding space plane, and in the cooking condition, the holding space plane extends in a substantially vertical orientation;
the heat source comprises a heat production area (74), over which area the radiant heat energy is produced, and which substantially extends in a heat source plane (76); the heat source plane extends substantially parallel to the holding space plane and is spaced away from the holding space plane;
the holder comprises a pair of holder members (24); the holding space is defined between the holder members; and in the loaded condition, both holder members locate against and in contact with the food item; the holder includes a holder member support (26);
**characterised in that**:
one or both holder members are slidingly mounted to the holder member support;
the holder member support includes a centring mechanism (32), which automatically centres the holder members and/or the holding space in the holder member support;
the holder member support includes support rods (28) and both holder members slide towards and away from each other along the support rods;
the centring mechanism includes resilient members (30) to bias both holder members towards each other, to apply a holding pressure to the food item.

2. Apparatus according to claim 1, in which the apparatus includes a pair of the heat sources; in the cooking condition, the holder mounting removably mounts the holder in the heat paths between the two heat sources in the predetermined location;
each heat source is movable towards and away from the holder mounting between an outward position and an inward position;
each heat source comprises a heat production area (74), over which area the radiant heat energy is produced, and which substantially extends in a respective heat source plane (76); each heat source plane extends substantially parallel to the holding space plane and is spaced away from the holding space plane.

3. Apparatus according to claims 1 or 2, in which the holder mounting holds the holder in the predetermined location with a lateral accuracy (ie in a direction normal to the holding space plane) of ± 3mm, more preferably ± 2mm and optimally ±1 mm.

4. Apparatus according to any of claims 1 to 3, in which the apparatus includes one or more drive devices (86) (eg a motor) for moving each heat source laterally (ie along a horizontal direction) towards and away from the holder mounting.

5. Apparatus according to any of the preceding claims, in which the apparatus includes one or more heat source mountings (82), and the or each heat source mounting mounts a respective one of the heat sources; the or each heat source mounting is arranged to permit linear movement of the respective one of the heat sources, towards and away from the holder mounting.

6. Apparatus according to claim 5 when dependent on claim 4, in which the or each heat source mounting includes a linear drive converter (88), which connects to the or one of the drive devices and converts rotary movement to linear movement.

7. Apparatus according to claims 5 or 6 when dependent on claim 4, in which the or each drive device and the respective connected heat source mounting are arranged to move the respective heat source in incremental steps, which may be no more than 1.0 mm and may be no more than 0.5mm.

8. Apparatus according to claim 4 or any claim dependent thereon, in which the apparatus includes a controller (46), which controls the operation of the apparatus; the controller provides one or more heat source position output signals (114) which control the operation of the drive device(s) and thereby control the position of the heat source(s); the controller receives input signals (100) and provides the heat source position output signal(s) which are dependent on the input signals received; the input signals include any of: a thickness indication input signal (102), an internal food temperature signal (104), one or more user input signals (106) which may include a food type signal (108) and a signal (109) relating to the degree of cooking required by the user; the controller receives input signals and provides heat output signals (112) which control the heat output(s) of the respective heat source(s), and which are dependent on the input signals received.

9. Apparatus according to any of the preceding claims, in which the or each holder member is removably mounted to the holder member support by one or more suspension arrangements (156), which may include one or more suspension magnets (158).

10. Apparatus according to any of the preceding claims, in which the holder member support includes a pair of support frames (34); each support frame supports one of the holder members; the holder member support includes a hinge (36) which connects the support frames so that they are hingedly connected; in the open condition, the support frames extend away from each other so that the food item is locatable into and removable out of the holding space and in the closed condition, the support frames extend alongside each other, substantially in parallel and the food item is not locatable into and removable out of the holding space.

11. Apparatus according to any of the preceding claims, in which the holder member support includes a retention arrangement (38) to retain the frames in the closed condition, and a handle (42).

12. Apparatus according to any of the preceding claims, in which the holder member support includes a thermocouple mounting formation (94) for mounting a thermocouple.

13. Apparatus according to any of the preceding claims, in which the holder mounting includes guide formations (54) which guide the holder as it is moved into and out of the heat paths.

14. Apparatus according to any of the preceding claims, in which the apparatus includes any of: a thickness sensor (62) for providing an indication of the thickness of the food item, and/or a position measuring device (64) for measuring the position of one or both of the holder members.

15. Apparatus according to any of the preceding claims, in which the or each heat source mounting is arranged to permit user selection of different orientations of the heat source(s) relative to the holder mounting; wherein the apparatus is movable between a grilling configuration and a pizza/baking configuration and/or a rotisserie configuration.

## Patentansprüche

1. Grillgerät (10), wobei das Gerät beinhaltet:
eine Wärmequelle (12), die, bei Verwendung, Strahlungswärmeenergie erzeugt, die sich entlang eines Wärmewegs bewegt,
einen Halter (14), der, in einem eingelegten Zustand, ein Lebensmittel (16) hält,
eine Halteraufnahme (20), die, wenn sich das Gerät in einem Garungszustand befindet, den Halter abnehmbar in dem Wärmeweg an einer vorbestimmten Stelle aufnimmt; wobei die Wärmequelle hin zu und weg von der Halteraufnahme zwischen einer Auswärtsposition und einer Einwärtsposition bewegbar ist;
der Halter einen Halteraum (18) definiert;
der Halteraum eine Länge (140), eine Breite (142) und eine Dicke (144) aufweist; die Länge und die Breite größer als die Dicke sind; die Länge und die Breite sich in einer Halteraumebene (22) erstrecken und die Dicke sich senkrecht zu der Halteraumebene erstreckt und, im Garungszustand, sich die Halteraumebene in einer im Wesentlichen vertikalen Orientierung erstreckt;
die Wärmequelle einen Wärmeerzeugungsbereich (74) umfasst, über den die Strahlungswärmeenergie erzeugt wird, und der sich im Wesentlichen in einer Wärmequellenebene (76) erstreckt; die Wärmequellenebene sich im Wesentlichen parallel zu der Halteraumebene erstreckt und von der Halteraumebene weg beabstandet ist;
der Halter ein Paar von Halterelementen (24) umfasst; der Halteraum zwischen den Halterelementen definiert ist; und, im eingelegten Zustand, beide Halterelemente an dem Lebensmittel anliegen und mit diesem in Kontakt stehen; der Halter eine Halterelementstütze (26) beinhaltet;
**dadurch gekennzeichnet, dass**:
ein oder beide Halterelemente gleitend an der Halterelementstütze montiert sind;
die Halterelementstütze einen Zentriermechanismus (32) beinhaltet, der automatisch die Halterelemente und/oder den Halteraum in der Halterelementstütze zentriert;
die Halterelementstütze Stützstangen (28) beinhaltet und beide Halterelemente entlang der Stützstangen aufeinander zu und voneinander weg gleiten;
der Zentriermechanismus resiliente Elemente (30) beinhaltet, um beide Halterelemente zueinander vorzuspannen, um so einen Haltedruck auf das Lebensmittel auszuüben.

2. Gerät nach Anspruch 1, wobei das Gerät ein Paar von Wärmequellen beinhaltet; in dem Garungszustand, die Halteraufnahme den Halter abnehmbar in den Wärmewegen zwischen den beiden Wärmequellen an der vorbestimmten Stelle aufnimmt;
jede Wärmequelle hin zu und weg von der Halteraufnahme zwischen einer Auswärtsposition und einer Einwärtsposition bewegbar ist;
jede Wärmequelle einen Wärmeerzeugungsbereich (74) umfasst, über den die Strahlungswärmeenergie erzeugt wird, und der sich im Wesentlichen in einer jeweiligen Wärmequellenebene (76) erstreckt; jede Wärmequellenebene sich im Wesentlichen parallel zu der Halteraumebene erstreckt und weg von der Halteraumebene beabstandet ist.

3. Gerät nach Anspruch 1 oder 2, wobei die Halteraufnahme den Halter an der vorbestimmten Stelle mit einer seitlichen Genauigkeit (d. h. in einer Richtung senkrecht zu der Halteraumebene) von ± 3 mm, bevorzugter ± 2 mm und optimal ± 1 mm hält.

4. Gerät nach einem der Ansprüche 1 bis 3, wobei das Gerät ein oder mehrere Antriebsgeräte (86) (z. B. einen Motor), zum seitlichen Bewegen jeder Wärmequelle (d. h. entlang einer horizontalen Richtung) hin zu und weg von der Halteraufnahme, beinhaltet.

5. Gerät nach einem der vorhergehenden Ansprüche, wobei das Gerät eine oder mehrere Wärmequellenaufnahmen (82) beinhaltet und die oder jede Wärmequellenaufnahme eine jeweilige der Wärmequellen aufnimmt; die oder jede Wärmequellenaufnahme so angeordnet ist, dass eine lineare Bewegung der jeweiligen der Wärmequelle, hin zu und weg von der Halteraufnahme, gestattet ist.

6. Gerät nach Anspruch 5, wenn abhängig von Anspruch 4, wobei die oder jede Wärmequellenaufnahme einen Linearantriebswandler (88) beinhaltet, der mit dem oder einem der Antriebsgeräte verbunden ist und eine Drehbewegung in eine Linearbewegung umwandelt.

7. Gerät nach Anspruch 5 oder 6, wenn abhängig von Anspruch 4, wobei das oder jedes Antriebsgerät und die jeweilige angeschlossene Wärmequellenaufnahme so angeordnet sind, dass die jeweilige Wärmequelle in inkrementalen Schritten bewegt wird, die nicht mehr als 1,0 mm und nicht mehr als 0,5 mm betragen dürfen.

8. Gerät nach Anspruch 4 oder einem davon abhängigen Anspruch, wobei das Gerät eine Steuerung (46) beinhaltet, die den Betrieb des Geräts steuert; die Steuerung ein oder mehrere Wärmequellenpositions-Ausgabesignale (114) bereitstellt, die den Betrieb des Antriebsgeräts/der Antriebsgeräte steuern und dadurch die Position der Wärmequelle(n) steuern; die Steuerung Eingabesignale (100) empfängt und das/die Wärmequellenpositions-Ausgabesignal(e) bereitstellt, die von den empfangenen Eingabesignalen abhängig sind; die Eingabesignale beliebiges von Folgendem umfassen: einem Dickenanzeige-Eingabesignal (102), einem internen Lebensmitteltemperatursignal (104), einem oder mehreren Benutzereingabesignalen (106), die ein Lebensmitteltypsignal (108) und ein Signal (109) in Bezug auf den von dem Benutzer verlangten Garungsgrad beinhalten können; die Steuerung Eingabesignale empfängt und Wärmeausgabesignale (112) bereitstellt, die die Wärmeausgabe(n) der jeweiligen Wärmequelle(n) steuern und von den empfangenen Eingabesignalen abhängig sind.

9. Gerät nach einem der vorhergehenden Ansprüche, wobei das oder jedes Halterelement durch eine oder mehrere Aufhängungsanordnungen (156), die einen oder mehrere Aufhängungsmagnete (158) beinhalten können, abnehmbar an der Halterelementaufnahme montiert ist.

10. Gerät nach einem der vorhergehenden Ansprüche, wobei die Halterelementstütze ein Paar von Stützrahmen (34) beinhaltet; jeder Stützrahmen eines der Halterelemente stützt; die Halterelementstütze ein Scharnier (36) beinhaltet, das die Stützrahmen so verbindet, dass sie gelenkig verbunden sind; im offenen Zustand, die Stützrahmen sich voneinander weg erstrecken, so dass das Lebensmittel in den Halteraum einsetzbar und aus diesem herausnehmbar ist und, im geschlossenen Zustand, sich die Stützrahmen im Wesentlichen parallel nebeneinander erstrecken und das Lebensmittel nicht in den Halteraum einsetzbar und aus diesem herausnehmbar ist.

11. Gerät nach einem der vorhergehenden Ansprüche, wobei die Halterelementstütze eine Rückhalteanordnung (38) zum Rückhalten der Rahmen im geschlossenen Zustand sowie einen Griff (42) beinhaltet.

12. Gerät nach einem der vorhergehenden Ansprüche, wobei die Halterelementstütze eine Thermoelement-Montageformation (94) zum Montieren eines Thermoelements beinhaltet.

13. Gerät nach einem der vorhergehenden Ansprüche, wobei die Halteraufnahme Führungsformationen (54) beinhaltet, die den Halter führen, während er in die Wärmewege hinein und aus diesen heraus bewegt wird.

14. Gerät nach einem der vorhergehenden Ansprüche, wobei das Gerät beliebiges von Folgendem beinhaltet: einem Dickensensor (62) zum Bereitstellen einer Anzeige der Dicke des Lebensmittels und/oder einem Positionsmessgerät (64) zum Messen der Position eines oder beider der Halterelemente.

15. Gerät nach einem der vorhergehenden Ansprüche, wobei die oder jede Wärmequellenaufnahme angeordnet ist, um die Benutzerauswahl verschiedener Orientierungen der Wärmequelle(n) relativ zu der Halteraufnahme zu gestatten; wobei das Gerät zwischen einer Grillkonfiguration und einer Pizza-/Backkonfiguration und/oder einer Drehspießkonfiguration bewegbar ist.

## Revendications

1. Appareil de cuisson au gril (10), l'appareil comprenant :
une source de chaleur (12) qui, lors de l'utilisation, produit une énergie thermique rayonnante qui se déplace le long d'un trajet de chaleur,
un dispositif de maintien (14) qui, dans un état chargé, maintient un produit alimentaire (16),
un élément de montage de dispositif de maintien (20) qui, lorsque l'appareil se trouve dans un état de cuisson, permet de monter amovible le dispositif de maintien sur le trajet de chaleur à un emplacement prédéterminé ;
la source de chaleur étant mobile vers l'élément de montage de dispositif de maintien et à l'opposé de celui-ci entre une position extérieure et une position intérieure ;
le dispositif de maintien définissant un espace de maintien (18) ;
l'espace de maintien présentant une longueur (140), une largeur (142) et une épaisseur (144) ; la longueur et la largeur étant supérieures à l'épaisseur ; la longueur et la largeur s'étendant dans un plan d'espace de maintien (22) et l'épaisseur s'étendant perpendiculairement au plan d'espace de maintien, et dans l'état de cuisson, le plan d'espace de maintien s'étendant dans une orientation sensiblement verticale ;
la source de chaleur comprenant une zone de production de chaleur (74), zone sur laquelle l'énergie thermique rayonnante est produite, et qui s'étend sensiblement dans un plan de source de chaleur (76) ; le plan de source de chaleur s'étendant sensiblement parallèlement au plan d'espace de maintien et étant espacé du plan d'espace de maintien ;
le dispositif de maintien comprenant une paire d'éléments de dispositif de maintien (24) ; l'espace de maintien étant défini entre les éléments de dispositif de maintien ; et dans l'état chargé, les deux éléments de dispositif de maintien se situant contre le produit alimentaire et en contact avec celui-ci ; le dispositif de maintien comprenant un support d'élément de dispositif de maintien (26) ;
l'appareil de cuisson au grill étant **caractérisé en ce que** :
l'un des éléments de dispositif de maintien ou les deux sont montés coulissants sur le support d'élément de dispositif de maintien ;
le support d'élément de dispositif de maintien comprend un mécanisme de centrage (32) qui centre automatiquement les éléments de dispositif de maintien et/ou l'espace de maintien dans le support d'élément de dispositif de maintien ;
le support d'élément de dispositif de maintien comprend des tiges de support (28) et les deux éléments de dispositif de maintien coulissent l'un vers l'autre et l'un à l'opposé de l'autre le long des tiges de support ;
le mécanisme de centrage comprend des éléments élastiques (30) pour solliciter les deux éléments de dispositif de maintien l'un vers l'autre, pour appliquer une pression de maintien sur le produit alimentaire.

2. Appareil selon la revendication 1, l'appareil comprenant une paire des sources de chaleur ; dans l'état de cuisson, l'élément de montage de dispositif de maintien montant amovible le dispositif de maintien sur les trajets de chaleur entre les deux sources de chaleur à l'emplacement prédéterminé ;
chaque source de chaleur étant mobile vers l'élément de montage de dispositif de maintien et à l'opposé de celui-ci entre une position extérieure et une position intérieure ;
chaque source de chaleur comprenant une zone de production de chaleur, zone sur laquelle l'énergie thermique rayonnante est produite, et qui s'étend sensiblement dans un plan de source de chaleur ; chaque plan de source de chaleur s'étendant sensiblement parallèlement au plan d'espace de maintien et étant espacé du plan d'espace de maintien.

3. Appareil selon la revendication 1 ou 2, l'élément de montage de dispositif de maintien maintenant le dispositif de maintien à l'emplacement prédéterminé avec une précision latérale (c'est-à-dire dans une direction perpendiculaire au plan d'espace de maintien) de ± 3 mm, plus préférablement de ± 2 mm et de manière optimale de ± 1 mm.

4. Appareil selon l'une quelconque des revendications 1 à 3, l'appareil comprenant un ou plusieurs dispositifs d'entraînement (p. ex. un moteur) pour déplacer latéralement (c'est-à-dire le long d'une direction horizontale) chaque source de chaleur vers l'élément de montage de dispositif de maintien et à l'opposé de celui-ci.

5. Appareil selon l'une quelconque des revendications précédentes, l'appareil comprenant un ou plusieurs éléments de montage de source de chaleur, et le ou les éléments de montage de source de chaleur montant chacun une source de chaleur respective parmi les sources de chaleur ; le ou les éléments de montage de source de chaleur étant agencés chacun pour permettre un déplacement linéaire de la source de chaleur respective parmi les sources de chaleur, vers l'élément de montage de dispositif de maintien et à l'opposé de celui-ci.

6. Appareil selon la revendication 5 lorsqu'elle dépend de la revendication 4, le ou les éléments de montage de source de chaleur comprenant chacun un convertisseur d'entraînement linéaire, qui se relie au ou à l'un des dispositifs d'entraînement et qui convertit un déplacement rotatif en un déplacement linéaire.

7. Appareil selon la revendication 5 ou 6 lorsqu'elle dépend de la revendication 4, le ou les dispositifs d'entraînement et le ou les éléments de montage de source de chaleur reliés respectifs étant agencés chacun pour déplacer la source de chaleur respective par pas incrémentiels, qui peuvent ne pas dépasser 1,0 mm et peuvent ne pas dépasser 0,5 mm.

8. Appareil selon la revendication 4 ou l'une quelconque des revendications qui en dépendent, l'appareil comprenant un dispositif de commande qui commande le fonctionnement de l'appareil ; le dispositif de commande fournissant un ou plusieurs signaux de sortie de position de source de chaleur qui commandent le fonctionnement du ou des dispositifs d'entraînement et commandent ainsi la position de la ou des sources de chaleur ; le dispositif de commande recevant des signaux d'entrée et fournissant le ou les signaux de sortie de position de source de chaleur qui dépendent des signaux d'entrée reçus ; les signaux d'entrée comprenant l'un quelconque des signaux suivants : un signal d'entrée d'indication d'épaisseur, un signal de température interne d'aliment, un ou plusieurs signaux d'entrée d'utilisateur qui peuvent comprendre un signal de type d'aliment et un signal relatif au degré de cuisson requis par l'utilisateur ; le dispositif de commande recevant des signaux d'entrée et fournissant des signaux de sortie de chaleur qui commandent la ou les sorties de chaleur de la ou des sources de chaleur respectives, et qui dépendent des signaux d'entrée reçus.

9. Appareil selon l'une quelconque des revendications précédentes, le ou les éléments de dispositif de maintien étant montés chacun amovibles sur le support d'élément de dispositif de maintien par un ou plusieurs agencements de suspension, qui peuvent comprendre un ou plusieurs aimants de suspension.

10. Appareil selon l'une quelconque des revendications précédentes, le support d'élément de dispositif de maintien comprenant une paire de cadres de support ; chaque cadre de support supportant l'un des éléments de dispositif de maintien ; le support d'élément de dispositif de maintien comprenant une charnière qui relie les cadres de support de telle sorte qu'ils soient reliés de manière articulée ; dans l'état ouvert, les cadres de support s'étendant à l'opposé l'un de l'autre de telle sorte que le produit alimentaire puisse être positionné dans l'espace de maintien et retiré hors de celui-ci, et, dans l'état fermé, les cadres de support s'étendant côte à côte, sensiblement en parallèle, et le produit alimentaire ne pouvant pas être positionné dans l'espace de maintien et retiré hors de celui-ci.

11. Appareil selon l'une quelconque des revendications précédentes, le support d'élément de dispositif de maintien comprenant un agencement de retenue pour retenir les cadres dans l'état fermé, et une poignée.

12. Appareil selon l'une quelconque des revendications précédentes, le support d'élément de dispositif de maintien comprenant une formation de montage de thermocouple permettant de monter un thermocouple.

13. Appareil selon l'une quelconque des revendications précédentes, l'élément de montage de dispositif de maintien comprenant des formations de guidage qui guident le dispositif de maintien lorsqu'il est déplacé sur les trajets de chaleur et à l'écart de ceux-ci.

14. Appareil selon l'une quelconque des revendications précédentes, l'appareil comprenant l'un quelconque des éléments suivants : un capteur d'épaisseur permettant de fournir une indication de l'épaisseur du produit alimentaire, et/ou un dispositif de mesure de position permettant de mesurer la position de l'un des éléments de dispositif de maintien ou des deux.

15. Appareil selon l'une quelconque des revendications précédentes, le ou les éléments de montage de source de chaleur étant agencés chacun pour permettre une sélection par l'utilisateur de différentes orientations de la ou des sources de chaleur par rapport à l'élément de montage de dispositif de maintien ; l'appareil étant mobile entre une configuration de cuisson au gril et une configuration de cuisson de pizza/au four et/ou une configuration de rôtissoire.
